# EUROPÄISCHE PATENTSCHRIFT

(11) **EP 0 391 887 B1**
(45) Veröffentlichungstag und Bekanntmachung des Hinweises auf die Patenterteilung: **21.06.1995**
(21) Anmeldenummer: 90890096.2
(22) Anmeldetag: 03.04.1990
(51) Int. Cl.: B29C 55/06, B29K 27/18

(54) **Monoaxial verstreckter Formkörper aus Polytetrafluoräthylen**
Monoaxially stretched shaped article of polytetrafluoroethylene
Article moulé monoaxialement étiré en polytétrafluoréthylène

(30) Priorität: 06.04.1989 AT 813/89
(43) Veröffentlichungstag der Anmeldung: 10.10.1990
(73) Patentinhaber: Lenzing Aktiengesellschaft, A-4860 Lenzing (AT)
(72) Erfinder: Sasshofer, Franz, Dr., A-4863 Seewalchen (AT); Reinmüller, Reinhard, Dipl.-Ing., A-4850 Timelkam (AT); Schlossnikl, Christian H.F., Dipl.-Ing., A-4840 Vöcklabruck (AT); Wimmer, Adalbert Georg, A-4840 Vöcklabruck (AT)
(74) Vertreter: Schwarz, Albin, Dr. Kopecky & Schwarz Patentanwälte

(56) Entgegenhaltungen:
- EP-A- 0 238 076
- US-A- 4 064 214
- US-A- 4 671 754
- CHEMICAL ABSTRACTS, vol. 89, no. 16, Columbus, Ohio, US; abstractno. 130591S, & JP-A-53 055 380 (NITTO ELECTRIC) 19. Mai 1978
- CHEMICAL ABSTRACTS, vol. 112, no. 4, Columbus, Ohio, US; abstractno. 22266Z, & JP-A-01 192 812 (TORAY) 2. August 1989

## Beschreibung

Die Erfindung betrifft einen monoaxial verstreckten Formkörper aus Polytetrafluoräthylen (PTFE) sowie ein Verfahren zu seiner Herstellung.

PTFE ist aufgrund seiner thermischen Stabilität und seiner chemischen Inertheit ein geschätzter Werkstoff. Allerdings kann es in einigen Bereichen nur beschränkt angewendet werden, da es bis heute nicht gelungen ist, aus PTFE einen Formkörper herzustellen, der eine hohe mechanische Festigkeit und zugleich auch eine hohe Dichte aufweist.

Würde ein derartiges Material beispielsweise zu Webgarnen verarbeitet werden, so könnten besonders strapazfähige Gewebe aus PTFE hergestellt werden. Auch für die Bänderung elektrischer Leiter wäre eine Kombination von besonderer Festigkeit mit hoher Dichte von Vorteil, da mit der Dichte die elektrische Durchschlagsfestigkeit zunimmt.

Heute sind im Handel zwar PTFE-Formkörper mit Festigkeiten bis zu 250 N/mm² erhältlich, ihre Dichte liegt jedoch unter 1 g/cm³. Diese Formkörper werden durch Verstrecken von ungesintertem PTFE hergestellt. Andererseits haben die heute bekannten gesinterten PTFE-Formkörper eine Dichte von etwa 2 g/cm³, ihre Festigkeiten betragen jedoch nur etwa 50 N/mm².

Aus der AT-B - 370.674 sind monoaxial verstreckte Folien aus gesintertem PTFE bekannt, deren Festigkeit in Verstreckungsrichtung Werte zwischen 50 N/mm² und 140 N/mm² aufweist. Diese Folien werden hergestellt, indem PTFE-Pulver zunächst zu einem zylindrischen Formkörper verpreßt wird. Anschließend wird der Formkörper gesintert, worauf die Folien abgeschält, auf Temperaturen von mindestens 327°C erhitzt und verstreckt werden.

Die GB-A - 2 025 835 beschreibt die Herstellung poröser PTFE-Formkörper nach dem Pastenextrusionsverfahren, wobei eine pastenförmige Masse, welche im wesentlichen PTFE-Pulver und ein Gleitmittel enthält, durch Düsen gepreßt wird, worauf das Gleitmittel durch Trocknen entfernt wird.

Danach wird der Formkörper Ober den Kristallitschmelzpunkt des PTFE (327°C) erhitzt und während des Erhitzens verstreckt. Die Festigkeit des erhaltenen Formkörpers ist dabei umso höher, je größer das Verstreckungsverhältnis gewählt wird. Allerdings nimmt parallel dazu die Dichte des Formkörpers ab, so daß beispielsweise bei einer Verstreckung um 550 % zwar die Festigkeit auf etwa 42 N/mm² ansteigt, die Dichte aber auf etwa 0,4g/cm³ abfällt.

Die Erfindung setzt sich zum Ziel, einen Formkörper aus PTFE zur Verfügung zu stellen, der die genannten Nachteile nicht aufweist und sowohl eine hohe mechanische Festigkeit als auch eine hohe Dichte besitzt.

Der erfindungsgemäße PTFE-Formkörper ist monoaxial verstreckt mit Festigkeitswerten in Verstreckungsrichtung von mindestens 500 N/mm², vorzugsweise mindestens 700 N/mm², und einer Dichte zwischen 1,80 und 2,30 g/cm³, vorzugsweise zwischen 2,00 und 2,20 g/cm³, wobei er vorzugsweise als Folie, Bändchen, Webgarn oder Nähgarn ausgebildet ist. Es hat sich gezeigt, daß bei den genannten Festigkeitswerten Dehnungswerte zwischen 3 % und 50 % auftreten.

Ein Verfahren zur Herstellung eines monoaxial verstreckten PTFE-Formkörpers ist aus der US-A - 4,064,214 allgemein bekannt. Gemäß diesem Verfahren wird der Formkörper durch kontinuierliches Formen einer pastenförmigen, PTFE-Pulver enthaltenden Masse zu einem Formling, Führen dieses Formlings über eine Mehrzahl von Rollen bzw. Walzen, Erhitzen und Verstrecken des Formlings hergestellt, wobei vor Aufbringung des Streckzuges der Formling auf eine Temperatur zwischen 327 und 450°C erhitzt, dabei gesintert und sodann verstreckt wird. Der erfindungsgemäße PTFE-Formkörper kann in Weiterentwicklung dieses Verfahrens hergestellt werden, indem der Formling zwischen einer(m) auf eine Temperatur zwischen 327 und 450°C, vorzugsweise zwischen 350 und 390°C, erhitzten Walze bzw. Walzenpaar und einem nicht beheizten Abzugsorgan verstreckt wird.

Die Erfindung beruht auf der Erkenntnis, daß PTFE-Formkörper mit sowohl hoher Dichte als auch hoher Festigkeit hergestellt werden können, wenn das geformte PTFE zuerst gesintert und unmittelbar darauf, d.h. ohne neuerliches Erwärmen, verstreckt wird. Das aus der US-A - 4,064,214 vorbekannte Verfahren unterscheidet sich vom erfindungsgemäßen Verfahren in einem wesentlichen Punkt, da gemäß der genannten US-A - 4,064,214 die gesinterte PTFE-Folie zur Verstreckung ein zweites Mal erwärmt wird. Die Verstreckung erfolgt zwischen beheizten Walzen, d.h., daß das Abzugsorgan eine beheizte Walze ist. Es ist mit dieser Anordnung nicht möglich, einen erfindungsgemäßen PTFE-Formkörper herzustellen.

Das erfindungsgemäße Verfahren ist ferner einfacher durchzuführen, da lediglich mit unbeheizten Walzen abgezogen werden braucht, es ist auch energiesparend und führt zu PTFE-Formkörpern mit einer neuen Eigenschaftskombination, nämlich einer hohen Festigkeit und einer hohen Dichte.

Eine vorteilhafte Ausführungsform dieses erfindungsgemäßen Verfahrens besteht darin, daß der Formling zwischen einer(m) auf eine Temperatur zwischen 327 und 450°C, vorzugsweise zwischen 350 und 390°C, erhitzten Walze bzw. Walzenpaar (3', 3'') und einem nicht beheizten Abzugsorgan (4) verstreckt wird

Es hat sich als zweckmäßig erwiesen, in einem Verhältnis zwischen 1 : 5 und 1 : 30, vorzugsweise zwischen 1 : 10 und 1 : 20 zu verstrecken. Bei einer Verstreckung im Verhältnis von 1 : 30 wird eine Festigkeit von etwa 1150 N/mm² erreicht.

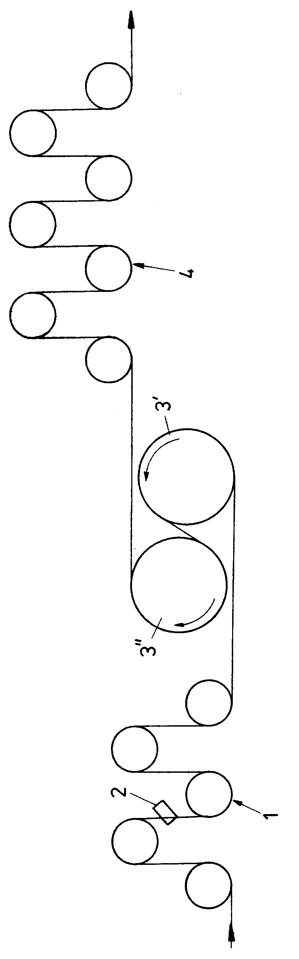

Eine Ausführungsform des erfindungsgemäßen Verfahrens wird anhand der Zeichnung näher erläutert.

Zunächst wird in an sich bekannter Weise PTFE-Pulver mit einem Gleitmittel gemischt, bei Temperaturen von 20 bis 50°C mehrere Stunden gelagert und bei Drucken von 10 bis 50 bar zu einer Vorform verpreßt. Diese Vorform wird anschließend in ebenfalls bekannter Weise durch eine Einlochdüse schnurartig extrudiert und zu einer Folie ausgewalzt, die durch Trocknen vom Gleitmittel befreit wird.

Diese getrocknete Folie wird nun kontinuierlich der in der Zeichnung schematisch dargestellten Sinter- und Streckanlage vorgelegt. Sie besteht im wesentlichen aus einem Lieferorgan 1, zwei beheizten Walzen 3', 3'' und einem unbeheizten Abzugsorgan 4, wobei die Pfeile in der Zeichnung die Drehrichtung der beheizten Walzen 3', 3'' und die Abzugsrichtung der Folie symbolisieren.

Die dem Lieferorgan 1 übertragene Folie wird kontinuierlich weiter über die beheizten Walzen 3', 3'' geführt und auf diesen gesintert. Die Folie wird dazu vorzugsweise in "S" -Form um die Walzen gelegt, um sie von beiden Seiten zu durchwärmen. Die Walzen sind auf eine Temperatur von mindestens 327°C erhitzt. Unmittelbar nach dem Sinterprozeß erfolgt die Verstreckung. Abgezogen wird mit dem nicht beheizten Abzugsorgan 4, das in der Zeichnung mehrspulig dargestellt ist. Anschließend wird das verstreckte Material auf geeigneten Spulaggregaten aufgewickelt.

Zur Herstellung von Bändchen wird die getrocknete Folie vorteilhaft bereits beim Durchlaufen durch das Lieferorgan 1 mit einem Klingenbalken 2 geschnitten. Mit den nachfolgenden Beispielen wird die Erfindung noch näher erläutert.

### Beispiel 1:

100 Teile PTFE-Emulsionspulver und 23 Teile Benzin (Siedebereich 186 bis 214°C) wurden zu einer Schnur verpreßt, zu einer Folie mit einer Dicke von 0,1 mm kalandriert und getrocknet. Anschließend wurde die Folie dem Lieferorgan 1 vorgelegt, in Streifen von 6 mm Breite geschnitten, über die auf 380°C beheizten Walzen 3', 3'' geführt, dabei gesintert und von diesen Walzen im Verhältnis 1 : 15 verstreckt. Das erhaltene Bändchen wies eine Festigkeit von 835 N/mm² bei 5,6% Dehnung und eine Dichte von 2,12 g/cm³ auf. Die Ausgangsdicke reduzierte sich dabei auf 0,0236 mm, die Breite auf 1,4 mm.

Die erhaltenen PTFE-Bändchen konnten zu Webgarn (gedreht als auch ungedreht) und zu Nähgarn (gezwirnt) verarbeitet werden.

### Beispiel 2:

Ein nach Beispiel 1 schnurartig verpreßtes PTFE wurde zu einer 0,114 mm dicken Folie ausgewalzt und getrocknet. Diese Folie wurde in einer Breite von 200 mm über die auf 375°C beheizten Walzen 3', 3'' geführt und dabei gesintert. Unmittelbar nach der Sinterung erfolgte die Verstreckung im Verhältnis 1 : 15. Die Festigkeit der erhaltenen Folie betrug 692 N/mm² bei einer Dehnung von 7,5 % und einer Dichte von 2,17 g/cm³. Die elektrische Durchschlagsfestigkeit betrug 190 kV/mm. Die Folie war 46,6 mm breit und 0,024 mm dick.

Die Folie war porenfrei, wies eine gute Gleiteigenschaft und eine hohe elektrische Isolationsfähigkeit auf und eignet sich ausgezeichnet für die Bänderung von elektrischen Leitern.

### Beispiel 3:

Ein nach Beispiel 1 schnurartig verpreßtes PTFE wurde zu einer 0,05 mm dicken Folie ausgewalzt und getrocknet. Die Folie wurde in Streifen mit einer Breite von 25 mm geschnitten, über auf 385°C beheizte Walzen 3', 3'' geführt und dabei gesintert. Anschließend erfolgte die Verstreckung im Verhältnis 1 : 15, wodurch eine Festigkeit von 703 N/mm² bei einer Dehnung von 5,6% und eine Dichte von 1,93 g/cm³ erreicht werden konnten. Die Breite betrug 5,8 mm und die Dicke 0,013 mm.

## Patentansprüche

1. Monoaxial verstreckter Formkörper aus Polytetrafluoräthylen (PTFE) mit Festigkeitswerten in Verstreckungsrichtung von mindestens 500 N/mm², vorzugsweise mindestens 700 N/mm², und einer Dichte zwischen 1,80 und 2,30 g/cm³, vorzugsweise zwischen 2,00 und 2,20 g/cm³.

2. Monoaxial verstreckter Formkörper aus PTFE nach Anspruch 1, ausgebildet als Folie, Bändchen, Webgarn oder Nähgarn.

3. Verfahren zur Herstellung eines monoaxial verstreckten Formkörpers aus PTFE nach Anspruch 1 durch kontinuierliches Formen einer pastenförmigen, PTFE-Pulver enthaltenden Masse zu einem Formling, Führen dieses Formlings über eine Mehrzahl von Rollen bzw. Walzen, Erhitzen und Verstrecken des Formlings, wobei vor Aufbringen des Streckzuges der Formling auf eine Temperatur zwischen 327 und 450°C, vorzugsweise zwischen 350 und 390°C, erhitzt, dabei gesintert und sodann verstreckt wird, dadurch gekennzeichnet, daß der Formling zwischen einer(m) auf eine Temperatur zwischen 327 und 450°C, vorzugsweise zwischen 350 und 390°C, erhitzten Walze bzw. Walzenpaar (3', 3'') und einem nicht beheizten Abzugsorgan (4) verstreckt wird.

4. Verfahren nach Anspruch 3, dadurch gekennzeichnet, daß der Formling in einem Verhältnis zwischen 1 : 5 und 1 : 30, vorzugsweise zwischen 1 : 10 und 1 : 20 verstreckt wird.

## Claims

1. Mono-axially oriented moulding of polytetrafluoroethylene (PTFE) having strength values in the direction of stretching of at least 500 N/mm², preferably at least 700 N/mm², and a density between 1.80 and 2.30 g/cm³, preferably between 2.00 and 2.20 g/cm³.

2. Mono-axially oriented moulding of PTFE in accordance with Claim 1, formed as film, tape, yarn for weaving or yarn for sewing.

3. Process for the preparation of a mono-axially oriented moulding of PTFE in accordance with Claim 1 by the continuous moulding of a pasty material containing PTFE powder to give a preform, passing this preform over a multiplicity of rolls or rollers, heating and stretching the preform whereby before application of the stretching process the preform is heated to a temperature between 327 and 450 °C, preferably between 350 and 390 °C and is thereby sintered and thereafter stretched, characterised in that, the preform is stretched between a roll or pair or rolls (3', 3'') heated at a temperature between 327 and 450 °C, preferably 350 and 390 °C and an unheated haul-off device (4) .

4. Process in accordance with Claim 3, characterised in that, the preform is stretched in a ratio between 1:5 and 1:30, preferably between 1:10 and 1:20.

## Revendications

1. Corps moulé monoaxialement étiré en polytétrafluoroéthylène (PTFE) présentant des valeurs de résistance mécanique dans la direction d'étirage d'au moins 500 N/mm², de préférence d'au moins 700 N/mm², et une densité comprise entre 1,80 et 2,30 g/cm³, de préférence comprise entre 2,00 et 2,20 g/cm³.

2. Corps moulé monoaxialement étiré en PTFE selon la revendication 1, formé comme une feuille, des bandelettes, du fil à tisser ou du fil à coudre.

3. Procédé pour la préparation d'un corps moulé monoaxialement étiré en PTFE selon la revendication 1 par moulage continu d'une masse pâteuse contenant de la poudre de PTFE en une ébauche, par introduction de cette ébauche sur une multiplicité de rouleaux ou de cylindres, par chauffage et étirage de l'ébauche, avant l'arrivée dans le train d'étirage l'ébauche étant chauffée à une température comprise entre 327 et 450°C, de préférence comprise entre 350 et 390°C, ce faisant frittée et ensuite étirée, caractérisé en ce que l'ébauche est étirée entre un cylindre ou une paire de cylindres (3', 3'') chauffés à une température comprise entre 327 et 450°C, de préférence comprise entre 350 et 390°C, et un organe d'extraction (4) non chauffé.

4. Procédé selon la revendication 3, caractérisé en ce que l'ébauche est étirée selon un rapport compris entre 1 : 5 et 1 : 30, de préférence compris entre 1 : 10 et 1 : 20.
